# EUROPEAN PATENT APPLICATION

(11) **EP 3 715 595 A1**
(43) Date of publication of application: **30.09.2020**
(21) Application number: 20166206.1
(22) Date of filing: 27.03.2020
(51) Int. Cl.: F01N 3/021, F01N 3/035, F01N 3/08, F01N 3/10, F01N 13/00

(54) **UTILIZING A GPF DOWNSTREAM OF A HYDROCARBON TRAP**

(30) Priority: 29.03.2019 US 201962825904 P
(71) Applicant: Johnson Matthey Public Limited Company, London EC4A 4AB (GB)
(72) Inventor: TYO, Eric, Wayne, PA 19087 (US)
(74) Representative: Lenden, Philip

(57) **Abstract**

An exhaust system for an internal combustion engine, and methods of using, the system comprising a hydrocarbon trap; and a gasoline particulate filter, located downstream from the hydrocarbon trap.

## Description

### BACKGROUND OF THE INVENTION

Hydrocarbon traps (HC traps) have been of long interest in gasoline emission control systems as a method to remedy hydrocarbon emissions from an engine cold start. The cold start hydrocarbon emissions are released from an engine into the exhaust gas before a three-way-catalyst (TWC) can reach its light-off temperature. HC traps can adsorb hydrocarbons at low temperature, and then desorb the hydrocarbon when the TWC is above its light-off temperature, thereby reducing the amount of hydrocarbon emissions released from the exhaust system into the atmosphere.

An active catalyst needs to be present to convert the desorbed hydrocarbon for a HC trap to have an appreciable impact on total hydrocarbon emissions. Many technologies have a TWC layer coated on top of the HC trap. Alternatively, TWCs are being place downstream of HC traps to convert the desorbing hydrocarbons. However, the inclusion of an additional brick or catalyst layer will necessarily increase backpressure in the system. It is desirable to efficiently reduce hydrocarbon emissions while minimizing backpressure in the system.

### SUMMARY OF THE INVENTION

According to aspects of the present invention, an exhaust system for an internal combustion engine, the system may include a hydrocarbon trap; and a gasoline particulate filter, located downstream from the hydrocarbon trap. In some aspects, the system does not include a three-way-catalyst. In some aspects, the system does not include a three-way-catalyst downstream of the hydrocarbon trap. In some aspects, the system includes a three-way-catalyst upstream of the hydrocarbon trap in a close-coupled position.

The hydrocarbon trap may be formulated to adsorb a portion of hydrocarbon contained in an exhaust gas at temperatures up to about 350°C. The hydrocarbon trap may also be formulated to desorb hydrocarbons at a temperature of about 350°C or greater. In some aspects, the gasoline particulate filter is formulated to oxidize the hydrocarbon contained in an exhaust gas. In some aspects, the hydrocarbon trap and the gasoline particulate filter comprise separate substrates.

According to aspects, of the present invention, a method of treating an exhaust gas from an internal combustion engine comprises contacting the exhaust gas with: a hydrocarbon trap; and a gasoline particulate filter, located downstream from the hydrocarbon trap. The hydrocarbon trap may adsorb a portion of hydrocarbon contained in the exhaust gas at temperatures up to about 350°C. The hydrocarbon trap may desorb a portion of hydrocarbon contained in the exhaust gas at temperatures of about 350°C or greater. The gasoline particulate filter may oxidize the hydrocarbon contained in an exhaust gas. In some aspects, the exhaust gas does not contact a three-way-catalyst. In some aspects, the exhaust gas does not contact a three-way-catalyst downstream of the hydrocarbon trap. In some aspects, the exhaust gas contacts a three-way-catalyst which is in a close-coupled position upstream of the hydrocarbon trap.

### DETAILED DESCRIPTION OF THE INVENTION

Systems and methods of the present invention relate to purification of an exhaust gas from an internal combustion engine. The invention is particularly directed to cleaning of an exhaust gas from a gasoline engine.

Systems and methods of the present invention may include a hydrocarbon trap (HC trap) followed by a gasoline particulate filter (GPF). As described in more detail below, systems of aspects of the present invention have been configured, formulated, and may be advantageously operated in order to efficiently reduce unwanted emissions without unnecessarily increasing backpressure. By identifying a synergy between the GPF and HC trap technology, it was discovered that these benefits may be accomplished by using a GPF to convert hydrocarbon desorbing from the HC trap, without the need for traditionally-included additional bricks or catalyst layers within the system.

### Hydrocarbon Trap

Systems of the present invention may include one or more HC trap. HC traps may be used as a tool to remedy hydrocarbon emissions from an engine cold start, and are designed to adsorb, or "trap", hydrocarbons from the exhaust gas at lower temperatures and then desorb them once a catalyst such as a three-way-catalyst (TWC) has reached its light-off temperature.

A HC trap may be formulated to adsorb a portion of hydrocarbon contained in the exhaust gas at low temperatures. In some aspects, a HC trap may be formulated to adsorb a portion of hydrocarbon contained in the exhaust gas at temperatures below the light-off temperature of a downstream GPF. In some aspects, a HC trap may be formulated to adsorb a portion of hydrocarbon contained in the exhaust gas at temperatures up to about 350°C; from about 20°C to about 350°C; or about 25°C to about 350°C. In some aspects, a HC trap may be formulated to then desorb a portion of hydrocarbon at a temperature of about 350°C or greater, above about 350°C, or about 350°C to about 500°C.

In some aspects, a HC trap may be in the form of a brick or monolith (for example, an extruded monolith) comprising a base substrate layered with one or more appropriate HC adsorbents. In some aspects, a HC trap may include pellets of the appropriate adsorbent. Additionally or alternatively, a HC trap may comprise a catalyst portion configured to oxidize hydrocarbons. As such, a HC trap may comprise a catalyst substrate coated with HC trap materials (e.g., zeolites) and the HC trap materials being coated with catalyst materials. HC trap adsorbents may be selected such that a maximum amount of HCs may be adsorbed during HC storing while allowing maximum desorption of HCs during HC purging at a low enough temperature without aging the trap. The selected adsorbents may also have high durability to prevent deterioration due to heat or poisoning from the exhaust gas. For example, HC traps may include at least one of activated carbon and catalyzed molecular sieves such as zeolites.

The molecular sieve can be an aluminosilicate zeolite or a isotype such as a SAPO. A HC trap may include mixtures of one or more different molecular sieves, including blends of two or more different SAPO and/or two or more different aluminosilicate zeolites, blends of two or more different aluminosilicate zeolites and/or blends of two or more different SAPOs.

Suitable molecular sieves for use in a HC trap include but are not limited to those with the International Zeolite Association Framework Type Codes MFI, BEA, FAU, MOR, FER, ERI, LTL, AEI, and CHA. In some aspects, arrangements combine aluminosilicate zeolites ZSM-5 (MFI) and Beta (BEA). Zeolite Y (FAU) can also be used.

The silica-to-alumina ratios (SAR) of the molecular sieves can be selected as appropriate to reflect the aging of the HC trap in the temperature range of interest, as also reflected in the reduction in oxygen storage capacity, to provide greater sensitivity for OBD. Suitable SARs for ZSM-5, for example, are about 80, whereas preferred SARs for zeolite Beta are about 150.

Suitable catalyzed molecular sieves such as zeolites may include a variety of ion-exchanged molecular sieves such as copper-exchanged zeolites and iron-exchange zeolites.

A combination of adsorbents may also be formulated based on the range of HC trap inlet temperatures desired or expected. For example, activated carbon based traps may be used for lower inlet temperatures (for example, not exceeding 350° C), while catalyzed zeolite based traps may be used for higher inlet temperatures (for example, up to 600° C).

A HC trap may be composed of sensitive transition and/or precious metals (e.g., Pt compared to Pd) compared to a TWC. Additionally, a HC trap may comprise a smaller amount of precious metals compared to a TWC. For example, a HC trap may comprise Pt and Pd species while a TWC may comprise only Pd species and not Pt species. Pt and Pd may be efficient at oxidizing different HCs. For example, Pt may react with alkanes more efficiently than Pd, while Pd may react with aromatics more efficiently than Pt. As such, a blend and/or a mixture of Pd and Pt species may decrease emissions more than a catalyst having only Pd or only Pt. In this way, the catalyst portion of a HC trap may be optimized to treat HCs. In some examples, the catalyst portion may comprise Pd on carbon, wherein the carbon is activated (comprises a reduced pore size) and increases a surface area exposed to gases. In some examples, the Pt and the Pd are preconditioned such that the Pt coat is lean and the Pd coat is rich. This may increase reactivity between the catalyst and the HCs.

In one example, a 1:1 ratio of Pd/Pt is used for the catalytic portion of the HC trap. This may result in an optimized alloy capable of treating hydrocarbons during lean, rich, and stoichiometric operations. As an example, the Pd may stabilize the Pt during lean exposure and the Pt may stabilize the Pd during rich exposure. It will be appreciated that other ratios of Pd/Pt may be used. For example, a 2:1, or greater, ratio of Pd/Pt may be used. Alternatively, a 1:2, or greater, ratio of Pd/Pt may be used. In some examples, the ratio may be based on vehicle operations, such that more Pd may be included if the vehicle tends to operate lean more often than rich. Thus, more Pt may be included if the vehicle tends to operate rich more often than lean. Additionally or alternatively, the Pd and Pt layers may be separated in the catalytic portion of the HC trap. This may include different catalyst brick zones and/or different layers of washcoat (e.g., washcoat on one side is Pd and washcoat on a second, different side is Pt). I n this way, a first metal (e.g., Pt) may oxidize hydrocarbons (e.g., toluene, benzene, xylene, etc.) before the hydrocarbons would degrade the performance of a second metal (e.g., Pd).

The adsorbents used may differ in porosity, and in some aspects, may be chosen accordingly based on the exhaust conditions. For example, a HC trap near the inlet of a trap assembly may include an adsorbent of larger porosity (for example, for trapping larger chain HCs) while a HC trap near the outlet of a trap assembly may include an adsorbent of smaller porosity (for example, for trapping smaller chain HCs). Additionally or optionally, the adsorbents used may differ in chemical characteristics. For example, a HC trap near the inlet of a trap assembly may include an adsorbent with a higher affinity for longer chain HCs while a HC trap near the outlet of the trap assembly may include an adsorbent with a higher affinity for shorter chain HCs. In one example, by positioning a trap of larger porosity before a trap of smaller porosity, in the direction of exhaust flow during a storing operation, potential issues related to trap clogging may be reduced.

In one example, a first HC trap may include macroporous activated carbon (for example, in monolith form or pellet form) while a second HC trap may include microporous activated carbon (for example, in monolith form or pellet form). In another example, a first HC trap may include macroporous catalyzed zeolites (for example, in monolith form or pellet form), while a second HC trap may include microporous catalyzed zeolites (for example, in monolith form or pellet form). In still other examples, a combination of activated carbon based traps and zeolites based traps may be used, for example, a first HC trap of macroporous activated carbon and a second HC trap of microporous zeolite.

### Gasoline Particulate Filter

Systems of the present invention may include one or more GPF. In some aspects, the GPF is located downstream from the HC trap. Systems of the present invention may include one or more additional GPF, which may include one or more catalyst coating.

A GPF may be formulated to oxidize hydrocarbon contained in an exhaust gas. A GPF may comprise a wall-flow particulate filter which is adapted to the treatment of gasoline engine exhaust gas streams, in particular those originating from direct injection gasoline engines. A GPF may be used trap particulates generated by the combustion reactions in the gasoline engine.

The GPF-substrate may be a wall-flow monolith or wall-flow filter, such as a wall-flow filter having a honeycomb structure. Suitable wall-flow substrates may include those having a plurality of fine, substantially parallel gas flow passages extending along the longitudinal axis of the substrate. Preferably, each passage is blocked at one end of the substrate body, with alternate passages blocked at opposite end-faces. U.S. Pat. No. 4,329,162 is incorporated herein by reference with respect to the disclosure of suitable wall-flow substrates which may be used in aspects of the present invention.

The GPF substrate may be conceived of any suitable material or combination of materials allowing for the filtering of particulate matter contained in gasoline engine exhaust gas without impeding the function of a gasoline engine in fluid communication with the GPF. For this purpose, porous materials are preferably used as the substrate material, in particular ceramic-like materials such as cordierite, alpha-alumina, silicon carbide, aluminum titanate, silicon nitride, zirconia, mullite, spodumene, alumina-silica-magnesia and zirconium silicate, as well as porous refractory metals and oxides thereof. "Refractory metal" refers to one or more metals selected from the group consisting of Ti, Zr, Hf, V, Nb, Ta, Cr, Mo, W, and Re. The GPF substrate may also be formed of ceramic fiber composite materials. In some aspects, the GPF substrate is preferably formed from cordierite, silicon carbide, and/or from aluminum titanate. In general, materials are preferred which are able to withstand the high temperatures to which a GPF is exposed to when used in the treatment of gasoline engine exhaust gas.

In some aspects, the GPF comprises a particulate filter substrate, a first catalyst layer disposed on or in the one surface of the filter substrate, and optionally a second catalyst layer disposed on or in the one surface of the filter substrate. In some aspects, the catalyst coating is arranged entirely or at least predominately within the porous walls of the wall flow filter substrate. Catalyst layers may be formulated as suitable based on the conditions and desired function, and may include, for example, one or more of the known GPF catalyst coatings, TWC coatings, or oxidation catalysts such as Pt on alumina.

### Three-Way Catalyst

Systems of the present invention may include a TWC. In some aspects, a system includes a TWC upstream of the HC trap. In some aspects, a system includes a TWC upstream of the HC trap, in a close-coupled position. When a TWC and HC trap are close-coupled, it is understood to mean that the HC trap is positioned close to and/or directly downstream from the TWC.

Three-way catalyst systems are well-known in the art. TWCs typically perform three main functions: (1) oxidation of CO to CO₂; (2) oxidation of unburned fuels to CO₂ and H₂O; and (3) reduction of NOₓ to N₂. A three-way catalyst preferably comprises one or more platinum group metals and one or more inorganic oxide supports. The platinum group metal (PGM) is preferably platinum, palladium, rhodium, or mixtures thereof.

The inorganic oxide supports most commonly include oxides of Groups 2, 3, 4, 5, 6, 13 and 14 and lanthanide elements. Useful inorganic oxide supports preferably have surface areas in the range 10 to 700 m²/g, pore volumes in the range 0.1 to 4 mL/g, and pore diameters from about 10 to 1000 Angstroms. The inorganic oxide support is preferably alumina, silica, titania, zirconia, ceria, niobia, tantalum oxides, molybdenum oxides, tungsten oxides, or mixed oxides or composite oxides of any two or more thereof, e.g. silica-alumina, ceria-zirconia or alumina-ceria-zirconia. Alumina and ceria are particularly preferred. In addition to functioning as supports, a ceria-containing support, such as ceria (CeO₂) or a ceria-zirconia mixed, oxide may also function as an oxygen storage component (OSC) within the TWC. The inorganic oxide support may also be a zeolite, such as a beta zeolite, a ZSM zeolite, a ferrierite, or a chabazite.

The three-way catalyst is preferably coated on a substrate. The substrate is preferably a ceramic substrate or a metallic substrate; more preferably, the substrate is a metallic substrate for better heat exchange and ease of construction. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

The metallic substrate may be made of any suitable metal, and in particular heat-resistant metals and metal alloys such as titanium and stainless steel as well as ferritic alloys containing iron, nickel, chromium, and/or aluminum in addition to other trace metals.

The substrate may be a filter substrate or a flow-through substrate, and is most preferably a flow-through substrate, especially a honeycomb monolith. The substrate is typically designed to provide a number of channels through which vehicle exhaust passes. The surface of the channels is loaded with the three-way catalyst.

The three-way catalyst may be added to the substrate by any known means. For example, the inorganic oxide support or a PGM-containing support material may be applied and bonded to the substrate as a washcoat, in which a porous, high surface area layer is bonded to the surface of the substrate. The washcoat is typically applied to the substrate from a water-based slurry, then dried and calcined at high temperature. If only the inorganic oxide support is washcoated on the substrate, the PGM metal may be loaded onto the dried washcoat support layer (by impregnation, ion-exchange, or the like), then dried and calcined. Preferred loadings of PGM loaded onto a substrate are 0.02 to 1.7 g/liter (1 to 300 g/ft³) catalyst volume.

### Aspects/Systems

Systems of the present invention include a HC trap with a GPF positioned downstream of the HC trap. In some aspects, the HC trap and the GPF comprises separate substrates. In some aspects, a system does not include a TWC. In some aspects, the system does not include a TWC downstream from the HC trap. In some aspects, the system includes a TWC upstream of the HC trap, for example, in a close coupled position with the HC trap. When a TWC and HC trap are close-coupled, it is understood to mean that the HC trap is positioned close to and/or directly downstream from the TWC.

The terms "downstream" and "upstream" describe the orientation of a catalyst or substrate where the flow of exhaust gas is from the inlet end to the outlet end of the substrate or article. As used herein, "upstream" and "downstream" are relative to the direction of exhaust flow from the engine and to the atmosphere.

### Methods

Methods of treating an exhaust gas from an internal combustion engine may include contacting the exhaust gas with a HC trap, and then contacting the exhaust gas with a GPF. The HC trap may adsorb a portion of hydrocarbon contained in the exhaust gas at a low temperature. For example, the HC trap may adsorb a portion of hydrocarbon contained in the exhaust gas at a temperature of up to about 350°C; from about 20°C to about 350°C; or about 25°C to about 350°C. The HC trap may then desorb a portion of hydrocarbon at a high temperature. Such high temperature may correspond to the light-off temperature of the GPF, such that the GPF may then oxidize/convert the hydrocarbon. For example, the HC trap may then desorb a portion of hydrocarbon at a temperature of above 350°C, or 350°C-500°C.

### Benefits

It has surprisingly been found that systems and methods of the present invention may provide benefits related to efficient removal of hydrocarbons from the exhaust gas, without increasing backpressure. Such benefits may be achieved by taking advantage of a newly identified synergy between GPF and HC trap technology, allowing the utilization of the GPF to convert hydrocarbon desorbed from the HC trap and thereby avoiding extra bricks or catalyst layers in the system which would unnecessarily increase backpressure. For example, traditional exhaust systems may include a TWC on a separate brick or coated on a HC trap in order to convert desorbed hydrocarbons, which could potentially be eliminated from a system of the present invention. In some aspects of the present invention, a system does not include a TWC. In some aspects, a system of the present invention does not include a TWC downstream of the HC trap.

### Terms

In the present disclosure, the singular forms "a," "an," and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

When a value is expressed as an approximation by use of the descriptor "about," it will be understood that the particular value forms another embodiment. In general, use of the term "about" indicates approximations that can vary depending on the desired properties sought to be obtained by the disclosed subject matter and is to be interpreted in the specific context in which it is used, based on its function. The person skilled in the art will be able to interpret this as a matter of routine. In some cases, the number of significant figures used for a particular value may be one non-limiting method of determining the extent of the word "about." In other cases, the gradations used in a series of values may be used to determine the intended range available to the term "about" for each value. Where present, all ranges are inclusive and combinable. That is, references to values stated in ranges include every value within that range.

It is to be appreciated that certain features of the invention which are, for clarity, described herein in the context of separate embodiments, may also be provided in combination in a single embodiment. That is, unless obviously incompatible or specifically excluded, each individual embodiment is deemed to be combinable with any other embodiment(s) and such a combination is considered to be another embodiment. Conversely, various features of the invention that are, for brevity, described in the context of a single embodiment, may also be provided separately or in any subcombination. Finally, while an embodiment may be described as part of a series of steps or part of a more general structure, each said step may also be considered an independent embodiment in itself, combinable with others.

The transitional terms "comprising," "consisting essentially of," and "consisting" are intended to connote their generally accepted meanings in the patent vernacular; that is, (i) "comprising," which is synonymous with "including," "containing," or "characterized by," is inclusive or open-ended and does not exclude additional, unrecited elements or method steps; (ii) "consisting of" excludes any element, step, or ingredient not specified in the claim; and (iii) "consisting essentially of" limits the scope of a claim to the specified materials or steps "and those that do not materially affect the basic and novel characteristic(s)" of the claimed invention. Embodiments described in terms of the phrase "comprising" (or its equivalents), also provide, as embodiments, those which are independently described in terms of "consisting of" and "consisting essentially" of. For those embodiments provided in terms of "consisting essentially of," the basic and novel characteristic(s) is the ability of the systems to combust fuels efficiently, without the need for separate igniters or heating the fuel mixtures above ignition temperatures prior to introducing them to the catalysts. Materials or steps which do not detract from such operability would be considered within the scope of such embodiments.

When a list is presented, unless stated otherwise, it is to be understood that each individual element of that list, and every combination of that list, is a separate embodiment. For example, a list of embodiments presented as "A, B, or C" is to be interpreted as including the embodiments, "A," "B," "C," "A or B," "A or C," "B or C," or "A, B, or C."

Throughout this specification, words are to be afforded their normal meaning, as would be understood by those skilled in the relevant art. However, so as to avoid misunderstanding, the meanings of certain terms will be specifically defined or clarified.

"Optional" or "optionally" means that the subsequently described circumstance may or may not occur, so that the description includes instances where the circumstance occurs and instances where it does not. Similarly, embodiments which refer to a component or step as being "optionally present," those embodiments include separate independent embodiments in which the step or component is present or absent. The description "optional" allows for, but does not require, the optional condition to occur.

## Claims

1. An exhaust system for an internal combustion engine, the system comprising:
a. a hydrocarbon trap; and
b. a gasoline particulate filter, located downstream from the hydrocarbon trap.

2. The exhaust system of claim 1, wherein the system does not include a three-way-catalyst.

3. The exhaust system of claim 1, wherein the system does not include a three-way-catalyst downstream of the hydrocarbon trap.

4. The exhaust system of claim 1, wherein the system includes a three-way-catalyst upstream of the hydrocarbon trap in a close-coupled position.

5. The exhaust system of claim 1, wherein the hydrocarbon trap is formulated to adsorb a portion of hydrocarbon contained in an exhaust gas at temperatures up to about 350°C.

6. The exhaust system of claim 5, wherein the hydrocarbon trap is also formulated to desorb hydrocarbons at a temperature of about 350°C or greater.

7. The exhaust system of claim 1, wherein the gasoline particulate filter is formulated to oxidize the hydrocarbon contained in an exhaust gas.

8. The exhaust system of claim 1, wherein the hydrocarbon trap and the gasoline particulate filter comprise separate substrates.

9. A method of treating an exhaust gas from an internal combustion engine, comprising contacting the exhaust gas with:
a. a hydrocarbon trap; and
b. a gasoline particulate filter, located downstream from the hydrocarbon trap.

10. The method of claim 9, wherein the hydrocarbon trap adsorbs a portion of hydrocarbon contained in the exhaust gas at temperatures up to about 350°C.

11. The method of claim 9, wherein the hydrocarbon trap desorbs a portion of hydrocarbon contained in the exhaust gas at temperatures of about 350°C or greater.

12. The method of claim 9, wherein the gasoline particulate filter oxidizes the hydrocarbon contained in an exhaust gas.

13. The method of claim 9, wherein the exhaust gas does not contact a three-way-catalyst.

14. The method of claim 9, wherein the exhaust gas does not contact a three-way-catalyst downstream of the hydrocarbon trap.

15. The method of claim 9, wherein the exhaust gas contacts a three-way-catalyst which is in a close-coupled position upstream of the hydrocarbon trap.
